# EUROPÄISCHE PATENTSCHRIFT

(11) **EP 1 517 141 B1**
(45) Veröffentlichungstag und Bekanntmachung des Hinweises auf die Patenterteilung: **16.10.2013**
(21) Anmeldenummer: 03021297.1
(22) Anmeldetag: 19.09.2003
(51) Int. Cl.: G01N 29/04

(54) **Verfahren zur Überprüfung der Standsicherheit von teilweise in einen Untergrund eingelassenen Metallmasten**
Method for testing stability of partially burried metal poles
Procédé d'examen de la stabilité de poteaux en metal partiellement enterrés

(43) Veröffentlichungstag der Anmeldung: 23.03.2005
(73) Patentinhaber: SAG Energieversorgungslösungen GmbH, 63225 Langen (DE)
(72) Erfinder: Pohlmann, Heinrich, 64390 Erzhausen (DE)
(74) Vertreter: Rohmann, Michael

(56) Entgegenhaltungen:
- EP-A- 0 379 622
- EP-A- 1 070 961
- US-A- 4 059 988
- US-A- 4 342 229

## Beschreibung

Die Erfindung betrifft die Verwendung eines Verfahrens zur Überprüfung der Standsicherheit von teilweise in einen Untergrund eingelassenen Metallmasten. Es liegt im Rahmen der Erfindung, dass es sich bei den Metallmasten um Stahlmaste handelt und insbesondere um Beleuchtungsmaste, an denen also Beleuchtungskörper angeordnet sind. Bei den Metallmasten handelt es sich vor allem und vorzugsweise um Rohrmaste, d. h. innen hohl ausgebildete Maste. Die Metallmaste haben beispielsweise einen kreisförmigen Querschnitt und sind zylinderförmig oder leicht konisch ausgebildet.

Normalerweise sind die Metallmaste teilweise, d. h. mit ihrem unteren Teil in den Untergrund eingelassen. Untergrund meint dabei insbesondere den Erdboden. Die Gründung der Metallmaste erfolgt zweckmäßigerweise durch Eingraben in den Erdboden, wobei sich die Tiefe bzw. das Ausmaß mit dem die Maste in den Erdboden eingelassen werden nach den Bodenverhältnissen richtet. Zur Verbesserung der Standsicherheit des Mastes kann um den in den Untergrund eingelassenen Teil des Mastes ein Betonfundament gegossen werden. Dabei kann sich die Oberkante des Betonfundamentes unterschiedlich tief unterhalb der Erdoberkante befinden.

Bis zum Anfang der 60er Jahre wurden unverzinkte Stahlmaste verwendet. Die Mastoberfläche wurde mit Hilfe von organischen Beschichtungsmitteln gegen Korrosion geschützt. Später wurden verzinkte Stahlmaste verwendet und die Mastoberflächen ebenfalls mit organischen Beschichtungsmitteln gegen Korrosion geschützt. Nach längeren Zeiträumen muss in der Regel die Korrosionsbeschichtung erneuert werden. Aufgrund des damit verbundenen Aufwandes wird aber der in den Untergrund bzw. in den Erdboden eingelassene Teil des Metallmastes normalerweise nicht erneut korrosionsgeschützt. Durch in das Erdreich eindringendes Wasser, Hundeurin, Salze und dergleichen wird aber das Metall im Untergrund bzw. im Erdboden ebenfalls angegriffen, so dass an den im Untergrund befindlichen Mastwänden mit der Zeit ein beträchtlicher Materialabtrag aufgrund von Korrosion stattfinden kann. Bei Rohrmasten sind auch die Mastoberflächen im Mastinneren der Korrosion unterworfen. Diese Korrosion ist insbesondere die Folge von im Mastinneren befindlichem Kondenswasser. Im Ergebnis bewirkt die Korrosion einen Materialabtrag an Mastelementen bzw. an den Mastwänden und somit eine oftmals erhebliche Reduzierung der Wandstärken. Dadurch wird die Standsicherheit der Metallmaste beeinträchtigt. Deshalb ist es wünschenswert und erforderlich die Korrosionsbeeinträchtigung bzw. die Standsicherheit der Metallmasten in bestimmten Zeitintervallen zu überprüfen.

Um die Restwandstärken von korrosionsbeeinträchtigten Metallmasten zu messen, ist aus der Praxis ein Ultraschallmessverfahren bekannt. Mit entsprechenden Handmessgeräten können Restwandstärken punktuell mit relativ hoher Genauigkeit gemessen werden. Um aber die Wandstärke des in den Untergrund eingelassenen Teil des Metallmastes zu messen, muss das Erdreich um den Mast herum aufgegraben werden. Das ist natürlich sehr aufwendig.

Weiterhin ist aus der Praxis bekannt, den Korrosionszustand der Innenoberfläche von Rohrmasten mit Hilfe einer Miniaturvideokamera oder mittels Endoskopie festzustellen. Auch diese Maßnahmen können aber keine ausreichende Auskunft über die Wandstärke bzw. den Korrosionszustand des in den Untergrund eingelassenen Teils des Metallmastes geben, weil mit diesen Maßnahmen die Außenoberfläche dieses Teils des Metallmastes nicht untersucht werden kann.

Weiterhin ist es bekannt, die Standsicherheit mit Hilfe von Belastungsversuchen durch seitliche bzw. horizontale Krafteinwirkung auf den Mast zu überprüfen. Durch stufenweise Krafterhöhung wird dabei geprüft, ob der Mast noch ein elastisches Verhalten aufweist. Diese Maßnahmen haben sich bewährt und liefern verlässliche Aussagen über die Korrosionsbeeinträchtigung bzw. über die Standfestigkeit von Metallmasten. Nichtsdestoweniger sind diese Maßnahmen relativ aufwendig.

Weiterhin ist es auch bekannt, aus EP 0 379 622, der Standsicherheit von massieven Holzmasten zu überprüfen.

Demgegenüber liegt der Erfindung das technische Problem zugrunde, ein Verfahren der eingangs genannten Art anzugeben, mit dem auf einfache und wenig aufwendige Weise funktionssicher und exakt die Standfestigkeit eines Metallmastes überprüft bzw. kontrolliert werden kann.

Zur Lösung dieses technischen Problems lehrt die Erfindung die Verwendung eines Verfahrens zur Überprüfung der Standsicherheit von teilweise in einen Untergrund eingelassenen Metallmasten, wie in Anspruch 1 offenbart.

Der Erfindung liegt die Erkenntnis zugrunde, dass die gemessenen Schwingungen des Metallmastes bzw. die Frequenzen dieser Schwingungen Aufschluss über die Korrosionsbeeinträchtigung und die Standsicherheit eines Metallmastes geben können. Der Erfindung liegt dabei insbesondere die Erkenntnis zugrunde, dass Materialschwächungen bzw. Wandstärkenreduzierungen an dem Metallmast Einfluss auf die Schwingungen bzw. auf die Frequenzen der Schwingungen haben. Durch Vergleich der Schwingungsmessdaten bzw. der Frequenzen eines korrosionsbeeinträchtigten Metallmastes mit aufgezeichneten Schwingungsmessdaten bzw. Frequenzen, insbesondere eines intakten Metallmastes kann auf das Ausmaß der Korrosionsbeeinträchtigung geschlossen werden.

Es liegt im Rahmen der Erfindung, dass es sich bei dem Metallmast um einen Stahlmast, insbesondere um einen verzinkten Stahlmast handelt. Es liegt fernerhin im Rahmen der Erfindung, dass der Metallmast zumindest an seiner Außenoberfläche mit einer Korrosionsbeschichtung, vorzugsweise mit einem organischen Korrosionsmittel beschichtet ist. Das erfindungsgemäße Verfahren eignet sich insbesondere für Rohrmasten, die innen hohl sind. Bei diesen Rohrmasten handelt es sich vor allem um Beleuchtungsmasten.

Es liegt im Rahmen der Erfindung, dass der Metallmast an zumindest einer Stelle durch zumindest einen Schlag mit der Maßgabe beaufschlagt wird, dass der Mast in Schwingungen versetzt wird. Nach sehr bevorzugter Ausführungsform der Erfindung wird der Metallmast mittels eines Impulshammers zu Schwingungen angeregt. Mit Hilfe von Kraftmessungen am Impulshammer kann die Aufschlagintensität eingestellt werden. - Es liegt im Rahmen der Erfindung, dass die Schwingungsanregung bzw. die Schlagbeaufschlagung des Mastes mit der Maßgabe durchgeführt wird, dass der Mast sowohl Querschwingungen bezogen auf die Mastachse als auch Walkschwingungen zeigt.

Nach der Ausführungsform der Erfindung ist die Stelle der Schlagbeaufschlagung an dem Mast zumindest 100 cm, vorzugsweise zumindest 150 cm oberhalb der Untergrundoberfläche bzw. oberhalb der Erdoberfläche angeordnet. Der Erfindung liegt insoweit die Erkenntnis zugrunde, dass bei einer Schlagbeaufschlagung in den vorgenannten bevorzugten Höhen die Gründungsart bzw. Gründungsform des Mastes im Untergrund keinen oder so gut wie keinen Einfluss auf die Schwingungen des Mastes hat. Unterschiedliche Gründungsarten des Mastes könnten grundsätzlich Frequenzverschiebungen bewirken. Nach der vorgenannten bevorzugten Ausführungsform brauchen aber unterschiedliche Gründungsarten bzw. Gründungsformen nicht berücksichtigt werden. Dann hat in erster Linie die Wandstärke bzw. Wandstärkenreduktion einen maßgeblichen Einfluss auf die Schwingungen bzw. auf die Frequenzen der Schwingungen.

Nach bevorzugter Ausführungsform der Erfindung weist die Messvorrichtung zumindest ein Messelement auf, das zur Messung der Schwingungen auf die Mastoberfläche aufgesetzt wird. Zweckmäßigerweise handelt es sich bei dem Messelement um einen Beschleunigungsaufnehmer. Die Befestigung eines Messelementes an einem Stahlmast erfolgt vorzugsweise durch Magnethaltekraft. Bei Masten aus nicht magnetisierbarem Werkstoff wird zweckmäßigerweise ein Adapter für ein Messelement auf die Mastoberfläche aufgeklebt.

Es liegt im Rahmen der Erfindung, dass die ermittelten Schwingungsmessdaten für den betreffenden Mast in einem Rechner abgespeichert werden. Es liegt weiterhin im Rahmen der Erfindung, dass mit Hilfe der Schwingungsmessdaten ein Frequenzspektrum mit den Eigenfrequenzen der Mastschwingungen aufgezeichnet wird. Zweckmäßigerweise wird das Frequenzspektrum durch eine Fourier-Analyse, vorzugsweise durch eine FFT-Analyse (Fast-Fourier-Transformations-Analyse) erstellt. Das aufgezeichnete Frequenzspektrum wird dann mit einem bereits aufgezeichneten Vergleichs-Frequenzspektrum verglichen. Aufgrund dieses Vergleichs kann auf die Korrosionsbeeinträchtigung bzw. auf die Wandstärkenreduzierung an dem Mast geschlossen werden.

Es liegt im Rahmen der Erfindung, dass die für einen Mast erhaltenen Schwingungsmessdaten mit den aufgezeichneten Schwingungsmessdaten eines intakten Mastes verglichen werden. Zweckmäßigerweise sind also in einem Rechner jungfräuliche Schwingungsmessdaten bzw. Frequenzdaten eines intakten Mastes abgespeichert und bei Abweichungen der gemessenen Schwingungsmessdaten bzw. Frequenzen des vermessenen Mastes kann auf Korrosionsbeeinträchtigung bzw. Materialschwächung/Wandstärkenreduzierung geschlossen werden. Der Erfindung liegt die Erkenntnis zugrunde, dass die Schwingungen bzw. Eigenschwingungen eines Mastes vom Masttyp bzw. von den Eigenschaften des speziellen Mastes, d. h. vom Durchmesser(Rohrdurchmesser), von den Wandstärken, von der Länge des Mastes und von der übrigen Geometrie des Mastes abhängen. Somit ist es zweckmäßig, dass Bezugsdaten bzw. jungfräuliche Schwingungsmessdaten für jeden speziellen Masttyp abgespeichert sind. Durch Wiederholungsmessungen während der Lebensdauer bzw. Betriebszeit von Masten können mit dem erfindungsgemäßen Verfahren aussagekräftige Bestandsaufnahmen durchgeführt werden. Verändern sich bei diesen Wiederholungsmessungen die Schwingungsmessdaten bzw. Eigenfrequenzen des Mastes, so ist davon auszugehen, dass eine Werkstoffschwächung bzw. Wandstärkenreduzierung stattgefunden hat, die entweder durch Korrosion oder beispielsweise durch Rissbildung infolge Materialermüdung zustande gekommen ist.

Wenn für bestimmte Masttypen keine Bezugsdaten bzw. jungfräulichen Schwingungsmessdaten vorliegen, kann das erfindungsgemäße Verfahren trotzdem oftmals erfolgreich durchgeführt werden. Häufig sind ganze Straßenzüge oder sogar ganze Stadtteile mit dem gleichen Masttypen bestückt. Durch Vergleich aller Messergebnisse für diese Masten können Maste mit deutlich verändertem Eigenresonanzverhalten erkannt werden.

Es wurde gefunden, dass unterschiedliche Beleuchtungskörper an Beleuchtungsmasten, an den Masten angebrachte Schilder, Seilabspannungen und an den Masten vorhandene Sicherungskästen und deren Ausgestaltung bei den Schwingungsmessungen vernachlässigt werden können. Auch die Temperatur hat keinen wesentlichen Einfluss auf das Schwingungsverhalten eines Mastes.

Der Erfindung liegt die Erkenntnis zugrunde, dass mit der erfindungsgemäßen Verwendung eine sehr verlässliche und funktionssichere Überprüfung der Standsicherheit von Metallmasten möglich ist. Hervorzuheben ist, dass die Verwendung des Verfahrens mit überraschend geringem Aufwand durchführbar ist. Der erforderliche apparative Aufwand ist gering. Die Messelemente, Impulshammer und Auswertungseinrichtung sind mobile Geräte, die beispielsweise von nur einer Person von Mast zu Mast transportiert werden können. Für eine Messung nach der erfindungsgemäßen Verwendung werden nur einige Minuten benötigt, so dass sich die erfindungsgemäße Verwendung auch durch einen überraschend geringen Zeitaufwand gegenüber den aus dem Stand der Technik bekannten Verfahren auszeichnet. Aufgrund des geringen zeitlichen, apparativen und personellen Aufwandes können ganze Mastnetze, insbesondere Beleuchtungsmastnetze sehr wirtschaftlich bzw. kostengünstig auf ihre Standsicherheit überprüft werden. Die erfindungsgemäße Verwendung kann im Übrigen auch mit einem aus dem Stand der Technik bekannten Verfahren zur Überprüfung der Standsicherzeit von Masten kombiniert werden. Wenn also für einen Mast eine charakteristische Verschiebung der Eigenfrequenzen zu beobachten ist, kann mit einem der aus dem Stand der Technik bekannten Verfahren das Ergebnis bestätigt werden. Von besonderer Bedeutung ist im Rahmen der Erfindung, dass auch Korrosionsbeeinträchtigungen des im Untergrund befindlichen Teils eines Mastes funktionssicher festgestellt werden können. Im Übrigen zeichnet sich die erfindungsgemäße Verwendung durch eine hohe Wiederholgenauigkeit bzw. Reproduzierbarkeit aus.

Nachfolgend wird die Erfindung anhand einer lediglich ein Ausführungsbeispiel darstellenden Zeichnung näher erläutert. Es zeigen in schematischer Darstellung:
- Fig. 1: ein Frequenzspektrum eines intakten Stahlmastes und
- Fig. 2: ein Frequenzspektrum eines Mastes mit Materialschwächungen.

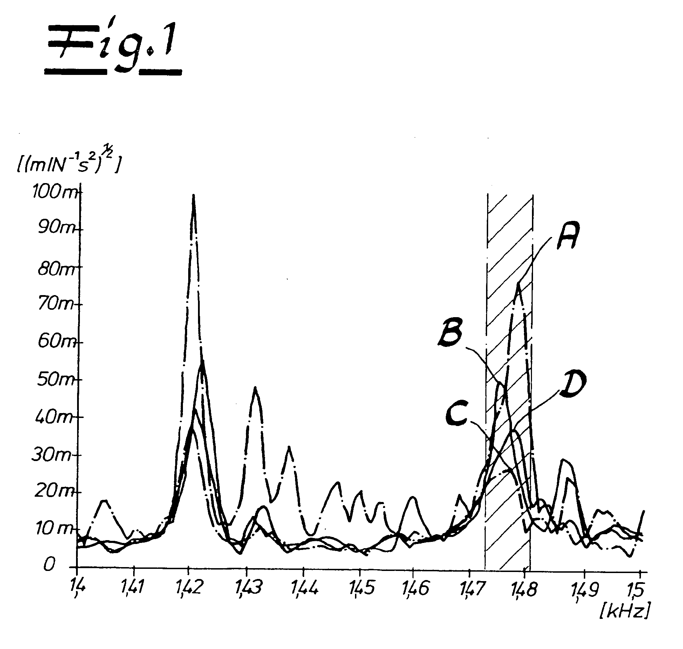

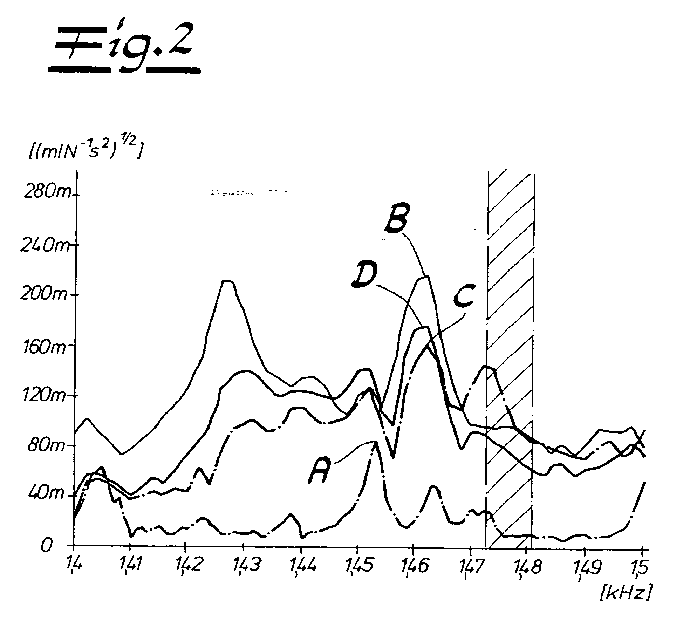

Die Fig. 1 und 2 zeigen Frequenzspektren von Stahlmasten, die 170 cm über der Erdoberfläche bzw. Erdoberkante mit einem Impulshammer beaufschlagt wurden und auf diese Weise zu Schwingungen angeregt wurden. Die Masten waren dabei entweder an ihrem unteren Ende oder an ihrem unteren und oberen Ende im Bereich der Erdoberkante in einer Einspannvorrichtung eingespannt. In den Frequenzspektren zeigt die Kurve A den Frequenzverlauf für eine untere Einspannung der Maste. Die Kurve B zeigt den Frequenzverlauf für einen Mast mit unterer und oberer Einspannung, der mit einer Leuchte bestückt ist. Die Kurve C steht für den Frequenzverlauf bei unterer und oberer Einspannung des Mastes mit Leuchte und einer angebrachten Beschilderung. Die Kurve D zeigt den Frequenzverlauf für den Mast bei unterer und oberer Einspannung und der Mast ist jeweils mit einer Leuchte einer Beschilderung und einer Abspannung versehen.

In Fig. 1 ist das Frequenzspektrum für einen neuen intakten Stahlmast dargestellt. Charakteristisch sind insbesondere die Peaks in dem schraffiert dargestellten Resonanzband. Fig. 2 entspricht einem Frequenzspektrum des gleichen Masttyps, wobei der Mast aber durch Korrosionsbeeinträchtigung bedingte Materialschwächungen aufweist. Es ist deutlich erkennbar, dass sich die charakteristischen Peaks gegenüber dem Resonanzband des unbeschädigten Mastes zu niedrigeren Frequenzen verschoben haben. Diese Verschiebung ist charakteristisch für eine Korrosionsbeeinträchtigung bzw. für eine Beeinträchtigung der Standsicherheit des Stahlmastes.

## Patentansprüche

1. Verwendung eines Verfahrens zur Überprüfung der Standsicherheit von teilweise in einen Untergrund eingelassenen innen hohle Metallmasten Masten,
wobei der Mast an zumindest einer Stelle, die zumindest 100 cm oberhalb der Untergrundoberfläche angeordnet ist, durch zumindest einen Schlag mit der Maßgabe beaufschlagt wird, dass der Mast in Schwingungen versetzt wird,
wobei diese Schwingungen mit zumindest einer Messvorrichtung gemessen werden,
wobei die dabei erhaltenen Schwingungsmessdaten mit aufgezeichneten Schwingungsmessdaten verglichen werden,
**dadurch gekennzeichnet, dass** die Reduzierung der Wandstärke gemessen wird.

2. Verwendung nach Anspruch 1, **dadurch gekennzeichnet, dass** der Metallmast mittels eines Impulshammers zu Schwingungen angeregt wird.

3. Verwendung nach einem der Ansprüche 1 oder 2, **dadurch gekennzeichnet, dass** die Stelle der Schlagbeaufschlagung zumindest 150 cm oberhalb der Untergrundoberfläche an dem Mast angeordnet ist.

4. Verwendung nach einem der Ansprüche 1 bis 3, **dadurch gekennzeichnet, dass** die Messvorrichtung zumindest ein Messelement aufweist, welches als Messelement zur Messung der Schwingungen auf die Mastoberfläche aufgesetzt wird.

5. Verwendung nach einem der Ansprüche 1 bis 4, **dadurch gekennzeichnet, dass** mit Hilfe der Schwingungsmessdaten ein Frequenzspektrum mit den Eigenfrequenzen der Mastschwingungen aufgezeichnet wird.

6. Verwendung nach Anspruch 5, **dadurch gekennzeichnet, dass** das Frequenzspektrum bis zu einer Maximalfrequenz von 6 kHz, vorzugsweise von 5 kHz aufgenommen wird.

7. Verwendung nach einem der Ansprüche 1 bis 6, **dadurch gekennzeichnet, dass** die erhaltenen Schwingungsmessdaten mit den aufgezeichneten Schwingungsmessdaten eines intakten Mastes verglichen werden.

## Claims

1. Use of a method for testing the stability of metal masts that are hollow inside and are partly mounted in the ground,
wherein the mast is acted upon by at least one impact at a position arranged at least 100 cm above the ground surface, providing that the mast is set into vibration,
wherein these vibrations are measured with at least one measuring device,
wherein the vibration measurement data obtained in this manner are compared with recorded vibration measurement data,
**characterized in that** the reduction in wall thickness is measured.

2. The use according to claim 1, **characterized in that** the metal mast is exited and set into vibration by means of an impulse hammer.

3. The use according to claim 1 or claim 2, **characterized in that** the position of impact action is arranged on the mast at least 150 cm above the ground surface.

4. The use according to any one of the claims 1 to 3, **characterized in that** the measuring device has at least one measuring element which is attached to the mast surface as measuring element for measuring the vibrations.

5. The use according to any one of the claims 1 to 4, **characterized in that** a frequency spectrum with the resonance frequencies of the mast vibrations is plotted with the aid of the vibration measurement data.

6. The use according to claim 5, **characterized in that** the frequency spectrum is recorded up to a maximum frequency of 6 kHz, preferably of 5 kHz.

7. The use according to any one of the claims 1 to 6, **characterized in that** the obtained vibration measurement data are compared with the vibration measurement data recorded for an intact mast.

## Revendications

1. Utilisation d'un procédé de vérification de la stabilité de pylônes métalliques creux à l'intérieur dressés sur un sol, dans laquelle le pylône est sollicité par au moins un coup à au moins un emplacement, qui est disposé au moins 100cm au-dessus de la surface de sol, avec la conséquence que le pylône est mu en oscillations, dans laquelle ces oscillations sont mesurées par au moins un dispositif de mesure, dans laquelle les données de mesure d'oscillation ainsi obtenues sont comparées avec des données de mesure d'oscillation enregistrées, **caractérisée en ce que** la réduction de l'épaisseur de paroi est mesurée.

2. Utilisation selon la revendication 1, **caractérisée en ce que** le pylône métallique est excité en oscillations au moyen d'un marteau à impulsions.

3. Utilisation selon une des revendications 1 ou 2, **caractérisée en ce que** l'emplacement de la sollicitation par un coup est disposé au moins 150cm au-dessus de la surface du sol sur le pylône.

4. Utilisation selon une des revendications 1 à 3, **caractérisée en ce que** le dispositif de mesure présente au moins un élément de mesure, qui est posé en tant qu'élément de mesure pour mesurer les oscillations sur la surface du pylône.

5. Utilisation selon une des revendications 1 à 4, **caractérisée en ce que** à l'aide des données de mesure d'oscillation, un spectre de fréquence avec les fréquences propres des oscillations de pylône est enregistré.

6. Utilisation selon la revendication 5, **caractérisée en ce que** le spectre de fréquence est enregistré jusqu'à une fréquence maximale de 6 kHz, de préférence de 5 kHz.

7. Utilisation selon une des revendications 1 à 6, **caractérisée en ce que** les données de mesure d'oscillation sont comparées avec les données de mesure d'oscillation enregistrées d'un pylône intact.
